# EUROPÄISCHE PATENTSCHRIFT

(11) **EP 3 106 654 B1**
(45) Veröffentlichungstag und Bekanntmachung des Hinweises auf die Patenterteilung: **05.09.2018**
(21) Anmeldenummer: 16001255.5
(22) Anmeldetag: 03.06.2016
(51) Int. Cl.: F02M 51/02, F02M 69/00, F02M 69/04, F16K 27/02, F02M 21/02, F16K 31/06

(54) **ELEKTROMAGNETISCHES VENTIL FÜR EIN KRAFTSTOFFSYSTEM**
ELECTROMAGNETIC VALVE FOR A FUEL SYSTEM
SOUPAPE ELECTROMAGNETIQUE POUR UN SYSTEME DE CARBURANT

(30) Priorität: 17.06.2015 DE 102015007694
(43) Veröffentlichungstag der Anmeldung: 21.12.2016
(73) Patentinhaber: Andreas Stihl AG & Co. KG, 71336 Waiblingen (DE)
(72) Erfinder: Ramler, Jens, 71332 Waiblingen (DE); Mayer, Felix, 71332 Waiblingen (DE); Oka, Hiroyuki, Iwateken (JP); Watanabe, Hideki, Hachimantashi, Iwateken (JP)
(74) Vertreter: Wasmuth, Rolf

(56) Entgegenhaltungen:
- DE-A1- 19 851 143
- DE-A1-102006 012 530
- DE-A1-102008 017 764
- DE-A1-102008 023 182
- DE-A1-102008 063 339
- DE-B3-102013 009 838
- DE-C1- 10 215 592

## Beschreibung

Die Erfindung betrifft ein elektromagnetisches Ventil für ein Kraftstoffsystem nach dem Oberbegriff des Anspruchs 1.

Ein derartiges elektromagnetisches Ventil ist aus der DE 10 2008 023 182 A1 bekannt und besteht aus einem Gehäuse, in dem eine elektrische Spule und ein Magnetanker angeordnet sind, wobei der Magnetanker und eine Ankerplatte Teile eines Magnetkreises bilden. Die Ankerplatte trägt ein Ventilglied, welches einen Ventilsitz mit einer Durchflussöffnung steuert. Bei stromdurchflossener Spule wird ein Magnetfeld erzeugt und die Ankerplatte von dem Magnetanker in eine erste Ventilstellung angezogen, der Betriebsstellung. Über eine Ventilfeder wird die Ankerplatte bei stromloser Spule in eine zweite Ventilstellung zurückgestellt, die Ruhestellung. Der Ventilsitz, das Ventilglied, die Ventilfeder und die Ankerplatte sind in dem Gehäuse gehalten.

Die Montage des elektromagnetischen Ventils aus vielen Einzelteilen ist aufwendig, wobei insbesondere die Lageabstimmung von Ventilsitz, Ventilglied, Ventilfeder und der Ankerplatte aufwendig sind. So wird ein den Ventilsitz enthaltender Ventilgrundkörper über das Gehäuseende geschoben, wobei die Überlappung zwischen dem Ventilgrundkörper und dem Gehäuseende derart zu wählen ist, dass die Vorspannung der Ventilfeder eine vorgegebene Größe aufweist. Dies erfordert eine präzise Montage.

Die in den Druckschriften DE 102 15 592 C1, DE 10 2008 063 339 A1, DE 10 2008 017 764 A1, DE 10 2013 009 838 B3 und DE 10 2006 012 530 A1 zeigen einen ähnlichen Aufbau, bei dem die Montage des Ventils mit angemessener Präzision auszuführen ist, um bei der Montage die Federkraft der Ventilfeder funktionsgerecht einzustellen.

Der Erfindung liegt die Aufgabe zugrunde, ein elektromagnetisches Ventil der gattungsgemäßen Art derart weiterzubilden, dass die lagerichtige Montage von Ventilsitz, Ventilglied, Ventilfeder und Ankerplatte erleichtert ist.

Die Aufgabe wird nach den Merkmalen des Anspruchs 1 gelöst.

Der Ventilsitz, das Ventilglied, die Ventilfeder und die Ankerplatte sind unverlierbar miteinander verbunden und bilden eine Ventileinheit. In der vormontierten Ventileinheit liegt der Ventilsitz lose zwischen dem Ventilglied und der Ankerplatte. Wird die Ventileinheit in ein offenes Ende des Gehäuses eingeschoben, gelangt die Ventilfeder auf einer Innenschulter des Gehäuses zur Anlage. Dadurch ist die Montagestellung der Ventileinheit im Gehäuse des elektromagnetischen Ventils konstruktiv vorgegeben, wodurch die Montage vereinfacht ist. Da der Ventilsitz an einem Ventilgrundkörper ausgebildet ist, ist der Ventilgrundkörper zwischen der Ankerplatte und dem Ventilglied mit Spiel gehalten. Der Ventilgrundkörper bildet dabei einen Grundkörper der Ventileinheit.

Die Ventilfeder und die Ankerplatte sind auf einer Stirnseite des Ventilgrundkörpers angeordnet, während das Ventilglied auf der anderen Stirnseite des Ventilgrundkörpers liegt. Der Ventilgrundkörper ist zwischen der Ventilfeder bzw. der Ankerplatte und dem Ventilglied beweglich gehalten, vorzugsweise unverlierbar gehalten.

Der Ventilgrundkörper weist eine Durchflussöffnung auf, die von dem Ventilglied gesteuert ist. Die Durchflussöffnung ist von einem Ventilstößel durchragt, wobei der Ventilstößel die Ankerplatte, die Ventilfeder und das Ventilglied trägt. Dabei sind die Ankerplatte und die Ventilfeder an dem einen Ende des Ventilstößels festgelegt und das Ventilglied auf dem anderen Ende des Ventilstößels befestigt.

In der vormontierten Ventileinheit sind die Ventilfeder, die Ankerplatte, der Ventilstößel, das Ventilglied und der Ventilgrundkörper unverlierbar miteinander verbunden; vorzugsweise kann der Ventilgrundkörper sich sowohl radial als auch axial zum Ventilstößel bewegen. Erst mit der Montage der Ventileinheit in das offene Ende des Gehäuses des elektromagnetischen Ventils wird die radiale Lage des Ventilgrundkörpers zum Ventilstößel ausgerichtet. Dies kann über die Ventilfeder erfolgen, die sich bei der Montage in das offene Ende des Gehäuses radial im Gehäuse positioniert und damit das Ventilglied relativ zum Ventilsitz am Ventilgrundkörper ausrichtet. Der Außendurchmesser der Ventilfeder entspricht dabei dem Innendurchmesser des offenen Endes des Gehäuses des elektromagnetischen Ventils.

Die Ventileinheit wird axial in das offene Ende des Gehäuses eingeschoben, wobei die Einschubtiefe der Ventileinheit in das offene Ende des Gehäuses konstruktiv durch eine Innenschulter begrenzt ist. Der Außenrand der Ventilfeder kommt auf der Innenschulter zur Anlage und wird vorzugsweise durch den eingepressten Ventilgrundkörper an der Innenschulter insbesondere geklemmt gehalten.

Bevorzugt ist die Ventilfeder drehfest im offenen Ende des Gehäuses festgelegt.

Insbesondere ist die Ventilfeder an dem Ventilgrundkörper drehfest befestigt, vorzugsweise festgelasert.

In Weiterbildung der Erfindung wird der Ventilhub des Ventils bei dem Zusammenbau der Ventileinheit eingestellt, so dass nach Einschub der Ventileinheit in das offene Ende des Gehäuses des elektromagnetischen Ventils keine weiteren Einstellarbeiten notwendig sind.

Die Ventilfeder ist in der vormontierten Ventileinheit - vor der Montage in das offene Ende des Gehäuses - frei von Federkräften.

Zweckmäßig ist der Ventilgrundkörper mit Übermaß ausgebildet und wird in das offene Ende des Gehäuses eingepresst. Bevorzugt besteht das Gehäuse aus Kunststoff.

In Weiterbildung der Erfindung kann zur Fixierung der Ventileinheit im offenen Ende des - vorzugsweise aus Kunststoff bestehenden - Gehäuses auch vorgesehen sein, die Ventileinheit im Gehäuse zu verstemmen, insbesondere thermisch zu verstemmen.

Das erfindungsgemäße elektromagnetische Ventil ist ein stromlos offenes Ventil, d. h., fließt in der Antriebsspule kein Strom, ist das Ventil offen. In der stromlos offenen Stellung des Ventils ist die Ventilfeder frei von Rückstellkräften.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Ansicht ein elektromagnetisches Ventil für ein Kraftstoffsystem,
- Fig. 2: einen Axialschnitt durch das elektromagnetische Ventil nach Fig. 1,
- Fig. 3: eine Explosionsdarstellung eines elektromagnetischen Ventils,
- Fig. 4: in perspektivischer Darstellung eine Ventileinheit aus einem Ventilsitz, einem Ventilglied, einer Ventilfeder und einer Ankerplatte,
- Fig. 5: einen Schnitt durch die Ventileinheit nach Fig. 4.

Das im Ausführungsbeispiel gezeigte elektromagnetische Ventil 1 ist als Durchflussventil für ein Kraftstoffsystem vorgesehen, in welchem vorzugsweise ein Druck im Bereich von mbar herrscht. Insbesondere wird das Ventil 1 zur Mengendosierung von Kraftstoff insbesondere im Millibar-Bereich eingesetzt, wozu die Antriebsspule des Ventils 1 mit einem in der Pulsweite modulierbaren Strom beaufschlagt wird. Im Betrieb des Ventils 1 wird der Strom in der Pulsweite moduliert, wobei das Ventil 1 entsprechend den Strompulsen bzw. den Strompausen öffnet und schließt. Die Durchflussmenge des Ventils 1 ist der Pulsweite des Stroms proportional, so dass über die Pulsweite die Durchflussmenge eingestellt werden kann.

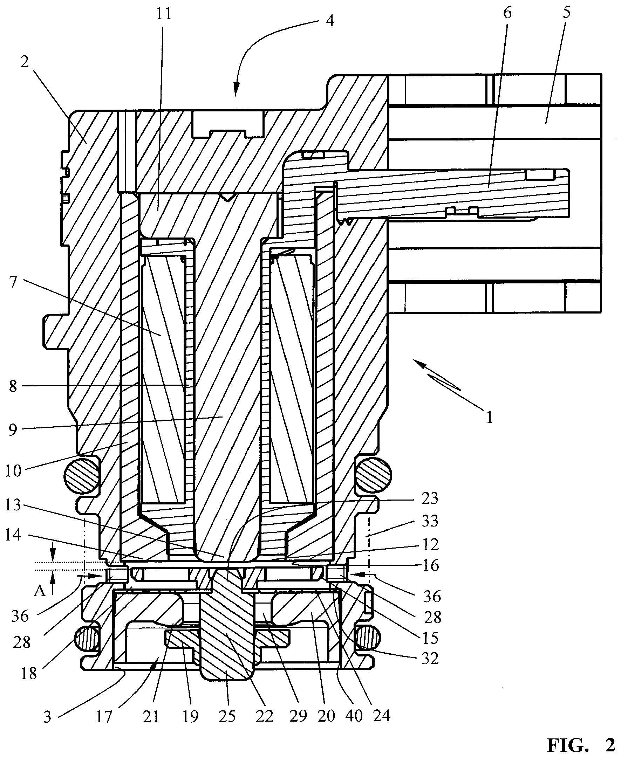

Wie Fig. 2 zeigt, besteht das elektromagnetische Ventil 1 aus einem im Wesentlichen zylindrischen Gehäuse 2 mit einem offenen Ende 3.

An dem dem offenen Ende 3 abgewandt liegenden Ende 4 ist eine elektrische Anschlussbuchse 5 vorgesehen, in die ein nicht näher dargestellter Ventilstecker zum elektrischen Anschluss des elektromagnetischen Ventils 1 an eine Steuerung einzustecken ist. Die elektrischen Steckkontakte 6 der Anschlussbuchse 5 stellen die elektrische Verbindung zur Spule 7 des elektromagnetischen Ventils 1 her.

Die Spule 7 des elektromagnetischen Antriebs des Ventils 1 ist auf einem Spulenträger 8 gehalten, der in das Gehäuse 2 eingeschoben ist.

Der Spulenträger 8 wird von einem zentralen Magnetkern 9 durchragt, der zusammen mit einem magnetischen, zylindrischen Außenmantel 10 einen magnetischen Kreis bildet.

Der Außenmantel 10 liegt innerhalb des Gehäuses 2 und umgibt die elektrische Spule 7 des elektromagnetischen Antriebs des Ventils 1.

An seinem geschlossenen Ende 4 des Gehäuses 2 steht der Magnetkern 9 über eine vorzugsweise einteilig angeformte Abschlussplatte 11 mit dem Außenmantel 10 in magnetischer Verbindung; an dem dem offenen Ende 3 des Gehäuses 2 benachbart liegenden Ende des Magnetkerns 9 ist ein Ringspalt 12 zwischen dem freien Ende 13 des Magnetkerns 9 und dem Ende 14 des Außenmantels 10 ausgebildet. Dem freien Ende 13 des Magnetkerns 9 gegenüber liegt eine Ankerplatte 15, die bei stromdurchflossener Spule 7 durch die magnetischen Feldlinien an die Stirnseite 16 des Antriebs angezogen wird. Die Ankerplatte 15 bildet den beweglichen Teil des elektromagnetischen Antriebs des Ventils 1.

Es kann vorteilhaft sein, zunächst den Spulenträger mit der elektrischen Spule 7 und dem Magnetkreis aus Magnetkern 9, Abschlussplatte 11 und Außenmantel 10 zu montieren und die vormontierte Einheit zur Bildung des Gehäuses 2 mit Kunststoff zu umspritzen.

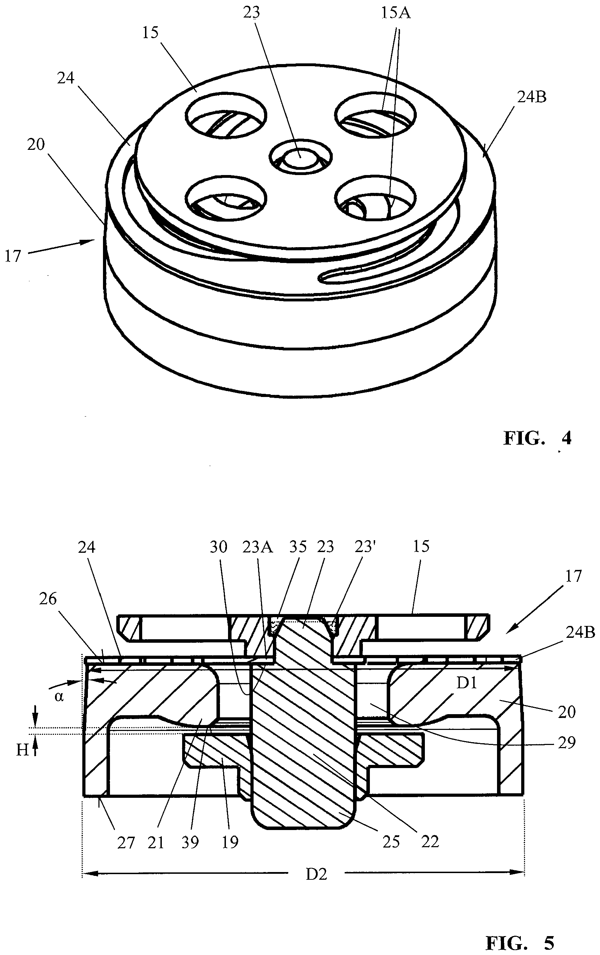

Die Ankerplatte 15 ist Teil einer Ventileinheit 17, die in das offene Ende 3 des - vorzugsweise aus Kunststoff bestehenden - Gehäuses 2 eingeschoben ist. Die Ventileinheit 17 ist insbesondere in den Figuren 4 und 5 dargestellt. Die Ventileinheit 17 besteht aus einem Ventilgrundkörper 20, an dem zentral ein Ventilsitz 21 ausgebildet ist. Der Ventilsitz 21 wird von einem Ventilstößel 22 durchragt, der an seinem dem Magnetkern 9 zugewandten Ende 23 eine Ventilfeder 24 und die Ankerplatte 15 trägt. An seinem anderen, dem Magnetkern 9 abgewandten Ende 25 des Ventilstößels 22 ist ein Ventilglied 19 gehalten. Das Ventilglied 19 kann aus einem elastischen Material bestehen, um eine Abdichtung am Ventilsitz 21 des Ventilgrundkörpers 20 zu gewährleisten. Es kann ausreichend sein, das Ventilglied 19 auf seiner dem Ventilsitz 21 zugewandten Flachseite 39 mit einer elastischen Dichtfläche zu versehen. Das Ventilglied 19 kann aus Metall bestehen, wodurch eine sichere Befestigung auf dem - ebenfalls aus Metall bestehenden - Ventilstößel 22 gewährleistet ist.

Im gezeigten Ausführungsbeispiel bestehen das Ventilglied 19 und der Ventilsitz 21 am Ventilkörper 20 aus Metall; das Ventil 1 schließt unter metallischer Anlage des Ventilglieds 19 an dem Ventilsitz 21. Dadurch wird ein robustes, verschleißarmes Ventil 1 geschaffen.

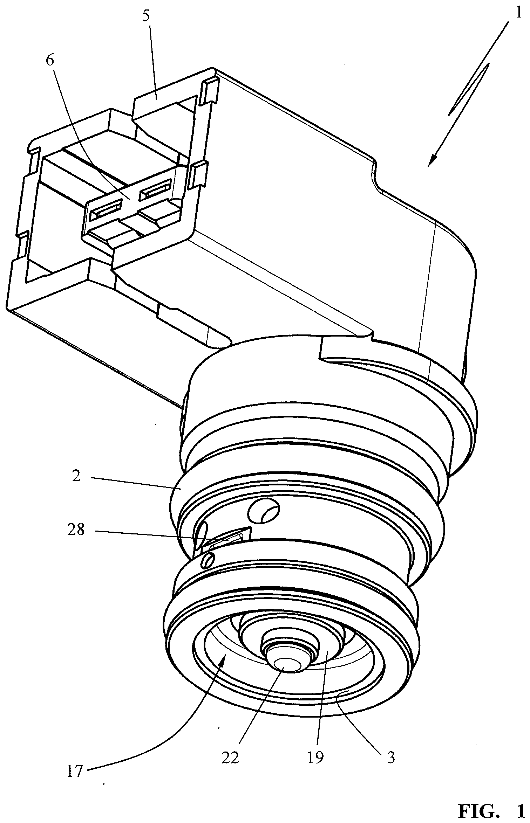

In der in Fig. 2 gezeigten Einbaulage der Ventileinheit 17 ist zwischen dem Ventilgrundkörper 20 und dem elektromagnetischen Antrieb ein Ventilraum 18 ausgebildet. Über Öffnungen 28, die bevorzugt als rechteckförmige Ausnehmungen (Fig. 1) im zylindrischen Gehäuse 2 des Ventils 1 ausgebildet sind, wird dem Ventilraum 18 Flüssigkeit, im Ausführungsbeispiel Kraftstoff zugeführt. Im Ausführungsbeispiel strömt der Kraftstoff in Pfeilrichtung 36 aus einem Ringraum 33 zu, der in einer Einbaulage des Ventils 1 gebildet ist. Eine präzise Zumessung einer Kraftstoffmenge über die zu schaltende Durchflussöffnung 29 des Ventilsitzes 21 ist gewährleistet.

Die Ankerplatte 15 und die Ventilfeder 24 liegen im Ventilraum 18 und sind von der Flüssigkeit, im Ausführungsbeispiel Kraftstoff, umspült. In der Ankerplatte 15 sind mehrere Durchbrechungen 15A ausgebildet, durch die bei einer Bewegung der Ankerplatte 15 die Flüssigkeit strömt. Die Ventilfeder 24 hat - bedingt durch ihren Aufbau - ebenfalls Durchbrechungen, die bei einem Ventilhub den Durchtritt von Kraftstoff ermöglichen.

Das im Ausführungsbeispiel gezeigte Ventil 1 ist ein stromlos offenes Ventil. Dies bedeutet, dass bei stromloser Spule die Ankerplatte 15 in einer Ruhestellung liegt, die als erste Ventilstellung bezeichnet werden kann. Fließt durch die Spule 7 ein Strom, wird die Ankerplatte 15 magnetisch angezogen, wodurch das Ventilglied 19 die Durchflussöffnung 29 verschließt. Die Ankerplatte 15 liegt in ihrer fast an der Stirnseite 16 anliegenden Stellung in einer zweiten Ventilstellung, einer Betriebsstellung.

Wird der Strom abgeschaltet, fällt die Ankerplatte 15 ab, und der Ventilstößel 22 wird unter der Kraft der Ventilfeder 24 in die in den Figuren 2 und 5 dargestellte Ruhelage zurückgestellt. In dieser Ruhelage, die der ersten - offenen - Ventilstellung entspricht, ist die Ventilfeder 24 kraftfrei. Die Ventilfeder 24 ist frei von Rückstellkräften.

Im gezeigten Ausführungsbeispiel bildet die Ventileinheit 17 eine vormontierte, selbstständige Baueinheit. Sie besteht aus dem Ventilgrundkörper 20, der auf seiner der Ankerplatte 15 zugewandten Stirnseite 26 mit einem kleineren Durchmesser D1 ausgebildet ist als auf seiner der Ankerplatte 15 abgewandten Stirnseite 27. Der Ventilgrundkörper 20 ist im Außendurchmesser leicht kegelig verjüngt gestaltet; wie in Fig. 5 gezeigt, ergibt sich ein Kegelwinkel α von 0,5° bis 2°.

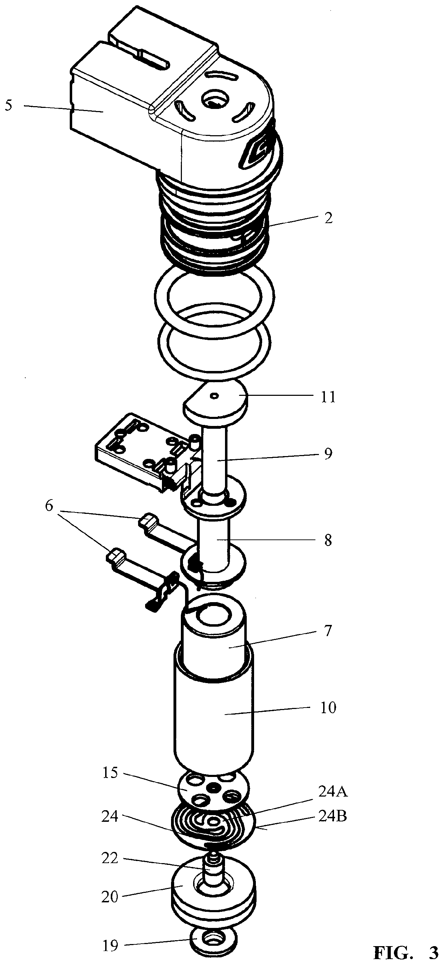

An der verjüngten Stirnseite 26 des Ventilgrundkörpers 20 liegt die Ventilfeder 24, die - vgl. Fig. 3 - nach Art einer flachen Spiralfeder aufgebaut ist. Das Zentrum 24A der Ventilfeder 24 wird von dem verjüngten Ende 23 des Ventilstößels 22 durchgriffen, wobei das Zentrum der Ventilfeder 24 auf einer Schulter 30 des Ventilstößels 22 aufliegt. Auf das freie Ende 23 des Ventilstößels 22 ist ferner die Ankerplatte 15 aufgepresst, wodurch die Ventilfeder 24 fest mit dem Ventilstößel 22 verbunden ist. Die Ankerplatte 15 hält die Ventilfeder 24 auf der Schulter 30. Der Ventilstößel 22 besteht - ebenso wie die Ankerplatte 15 - aus Metall, wobei zur Fixierung der Ankerplatte 15 auf dem Ende 23 des Ventilstößels 22 das Ende 23 plastisch verformt wird. Wie in Fig. 5 strichliert und stark vereinfacht gezeigt ist, liegt der verformte Kopf 23' des Endes 23 in einer Vertiefung 35 der Ankerplatte 15, wodurch eine formschlüssige Verbindung hergestellt ist.

Nunmehr wird der Ventilstößel 22 durch die Durchflussöffnung 29 im Zentrum des Ventilgrundkörpers 20 geführt und auf sein freies Ende 25 das Ventilglied 19 aufgeschoben, vorzugsweise unverlierbar befestigt. Insbesondere wird das Ventilglied 19 auf den Ventilstößel 22 aufgepresst. Unter unverlierbar wird verstanden, dass nach Montage der einzelnen Bauteile der Ventileinheit 17 alle Bauteile miteinander - vorzugsweise beweglich - verbunden sind, so dass alle Bauteile nur zusammen transportiert und montiert werden können. Die Ventileinheit 17 bildet eine selbstständige Baugruppe, die nach Lösen der einzelnen Bauteile wieder in ihre Einzelbauteile zerlegbar ist.

Die Montage des Ventilglieds 19 auf dem Ventilstößel 22 wird derart ausgeführt, dass bei der Vormontage der Ventileinheit 17 bereits der Hub H des Ventils 1 eingestellt wird. Der Hub H ist zweckmäßig kleiner als der Abstand A, den die Ankerplatte 15 in ihrer Ruhelage, also in der ersten Ventilstellung, von der Stirnseite 16 des elektromagnetischen Antriebs aufweist.

Ist das Ventilglied 19 auf dem Ventilstößel 22 mit dem Hub H zum Ventilsitz 21 aufgepresst, ist der Ventilgrundkörper 20 unverlierbar mit den übrigen Bauelementen der Ventileinheit 17, nämlich mit der Ankerplatte 15, der Ventilfeder 24, dem Ventilstößel 22 und dem Ventilglied 19 verbunden.

In Weiterbildung der Erfindung kann die Ventilfeder 24 drehfest festgelegt sein. Zweckmäßig wird die Ventilfeder 24 an dem Ventilgrundkörper 20 der Ventileinheit 17 festgelegt. Der Ventilgrundkörper 20 besteht vorzugsweise aus Metall. Der Außenrand 24B der Ventilfeder 24 kann auf dem Ventilgrundkörper 20 drehfest festgelegt sein. Insbesondere kann die Ventilfeder 24 an dem Ventilgrundkörper 20 festgeschweißt oder festgelasert werden.

Ist die Ventileinheit 17 fertig montiert, liegt das Ventilglied 19 mit dem eingestellten Hub H zum Ventilsitz 21; die Ventilfeder 24 ist in dieser Stellung frei von Federkräften.

Zur Montage der Ventileinheit 17 wird diese in das offene Ende 3 des Gehäuses 2 eingeschoben. Dabei kommt der Außenrand 24B der Ventilfeder 24 auf einer Innenschulter 32 des Gehäuses 2 zu liegen. Ist die Ventilfeder 24 nicht mit dem Ventilgrundkörper 20 verbunden, wie vorstehend als bevorzugte Ausführungsform erläutert ist, so ergibt sich eine radiale Ausrichtung der Ventilfeder 24 beim Einschieben der Ventileinheit 17 in das Gehäuse 2. Beim Einpressen des Ventilgrundkörpers 20 in das offene Ende 3 wird der Außenrand 24B der Ventilfeder 24 auf der Innenschulter 32 des Gehäuses 2 festgeklemmt. Durch das Einpressen des Ventilgrundkörpers 20 in das offene Ende 3 wird die Ventilfeder auf der Innenschulter 32 einerseits drehfest fixiert und andererseits radial ausgerichtet, wodurch das Ventilglied 19 lagerichtig zum Ventilsitz 21 ausgerichtet ist.

Zweckmäßig weist der Ventilgrundkörper 20 des Ventilsitzes 21 bezogen auf den Durchmesser des offenen Endes 3 des Gehäuses 2 ein Übermaß auf, so dass mit Einpressen der Ventileinheit 17 in das offene Ende 3 eine dauerhafte, sichere Fixierung des Ventilgrundkörpers 20 in dem offenen Ende 3 erzielt ist.

In einer weiteren Ausführungsform kann die Ventileinheit 17 in dem offenen Ende 3 des Gehäuses 2 auch durch thermisches Verstemmen sicher festgelegt werden. Hierbei wird der Kunststoff des Gehäuses angeschmolzen und verdrängt, wobei der angeschmolzene Kunststoff den Umfangsrand 40 des Ventilgrundkörpers 20 überdeckt und nach dem Erkalten die Ventileinheit 17 formschlüssig im offenen Ende 3 hält.

## Patentansprüche

1. Elektromagnetisches Ventil für ein Kraftstoffsystem, bestehend aus einem Gehäuse (2), in dem eine elektrische Spule (7) und ein Magnetanker (9) angeordnet sind,
1.1: wobei der Magnetanker (9) und eine Ankerplatte (15) Teile eines Magnetkreises bilden,
1.2: und die Ankerplatte (15) ein Ventilglied (19) trägt,
1.3: welches mit einer Durchflussöffnung (29) an einem Ventilsitz (21) das schaltbare Ventil (1) bildet,
1.4: wobei bei stromdurchflossener Spule (7) im Magnetanker (9) ein Magnetfeld erzeugt ist und die Ankerplatte (15) von dem Magnetanker (9) in eine Betriebsstellung angezogen ist,
1.5: und mit einer Ventilfeder (24), die bei stromloser Spule (7) die Ankerplatte (15) in eine Ruhestellung zurückstellt,
1.6: und der Ventilsitz (21), das Ventilglied (19), die Ventilfeder (24) und die Ankerplatte (15) in dem Gehäuse (2) gehalten sind,
**dadurch gekennzeichnet,**
1.7: dass der Ventilsitz (21), das Ventilglied (19), die Ventilfeder (24) und die Ankerplatte (15) miteinander unverlierbar verbunden sind und eine vormontierte Ventileinheit (17) bilden,
1.8: dass in der Ventileinheit (17) der Ventilsitz (21) lose zwischen dem Ventilglied (19) und der Ankerplatte (15) gehalten ist,
1.9: dass die Ventileinheit (17) in ein offenes Ende (3) des Gehäuses (2) eingeschoben ist,
1.10: und dass die Ventilfeder (24) auf einer Innenschulter (32) des Gehäuses (2) aufliegt,
1.11: und dass der Ventilsitz (21) an einem Ventilgrundkörper (20) ausgebildet ist,
1.12: wobei in der vormontierten Ventileinheit (17) der Ventilgrundkörper (20) zwischen der Ankerplatte (15) und dem Ventilglied (19) mit Spiel gehalten ist.

2. Ventil nach Anspruch 1,
**dadurch gekennzeichnet, dass** die Ventilfeder (24) und die Ankerplatte (15) auf der einen Stirnseite (26) des Ventilgrundkörpers (20) und das Ventilglied (19) auf der anderen Stirnseite (27) des Ventilgrundkörpers (20) angeordnet ist.

3. Ventil nach Anspruch 1 oder 2,
**dadurch gekennzeichnet, dass** der Ventilgrundkörper (20) eine Durchflussöffnung (29) aufweist, die von einem Ventilstößel (22) durchragt ist, und der Ventilstößel (22) die Ankerplatte (15), die Ventilfeder (24) und das Ventilglied (19) trägt.

4. Ventil nach einem der Ansprüche 1 bis 3,
**dadurch gekennzeichnet, dass** die Ventilfeder (24) der Ventileinheit (17) durch Montage im offenen Ende (3) des Gehäuses (2) radial positioniert ist und das Ventilglied (19) relativ zum Ventilsitz (21) am Ventilgrundkörper (20) ausrichtet.

5. Ventil nach einem der Ansprüche 1 bis 4,
**dadurch gekennzeichnet, dass** die Einschubtiefe der Ventileinheit (17) in das offene Ende (3) des Gehäuses (2) durch eine Innenschulter (32) begrenzt ist.

6. Ventil nach einem der Ansprüche 1 bis 5,
**dadurch gekennzeichnet, dass** die Ventilfeder (24) drehfest festgelegt ist.

7. Ventil nach Anspruch 1,
**dadurch gekennzeichnet, dass** die Ventilfeder (24) an dem Ventilgrundkörper (20) drehfest festgelegt ist.

8. Ventil nach Anspruch 7,
**dadurch gekennzeichnet, dass** die Ventilfeder (24) auf dem Ventilgrundkörper (20) festgelasert ist.

9. Ventil nach einem der Ansprüche 1 bis 8,
**dadurch gekennzeichnet, dass** der Ventilhub (H) des Ventils (1) bei der Vormontage der Ventileinheit (17) eingestellt ist.

10. Ventil nach einem der Ansprüche 1 bis 9,
**dadurch gekennzeichnet, dass** in der vormontierten Ventileinheit (17) die Ventilfeder (24) frei von Federkräften ist.

11. Ventil nach einem der Ansprüche 1 bis 10,
**dadurch gekennzeichnet, dass** der Ventilgrundkörper (20) mit Übermaß ausgebildet und in das offene Ende (3) des Gehäuses (2) eingepresst ist.

12. Ventil nach einem der Ansprüche 1 bis 11,
**dadurch gekennzeichnet, dass** der Ventilgrundkörper (20) im offenen Ende (3) des Gehäuses (2) thermisch verstemmt ist.

13. Ventil nach einem der Ansprüche 1 bis 12,
**dadurch gekennzeichnet, dass** das Ventil (1) ein stromlos offenes Ventil ist.

14. Ventil nach Anspruch 13,
**dadurch gekennzeichnet, dass** die Ventilfeder (24) in der stromlos offenen Stellung des Ventils (1) frei von Rückstellkräften ist.

## Claims

1. An electromagnetic valve for a fuel system comprising a housing (2) in which are arranged an electrical coil (7) and a magnet armature (9),
1.1 the magnet armature (9) and an armature plate (15) forming parts of a magnetic circuit,
1.2 and the armature plate (15) bearing a valve member (19),
1.3 which forms the switchable valve (1) with a flow opening (29) on a valve seat (21),
1.4 a magnetic field being generated and the armature plate (15) being attracted away from the magnet armature (9) into a operating position when a current flows through the coil (7) in the magnet armature (9),
1.5 and comprising a valve spring (24) which returns the armature plate (15) to a rest position when the coil (7) is currentless,
1.6 and the valve seat (21), the valve member (19), the valve spring (24) and the armature plate (15) being held in the housing (2),
**characterised in that**
1.7 the valve seat (21), the valve member (19), the valve spring (24) and the armature plate (15) are captively connected to one another and form a pre-assembled valve unit (17),
1.8 the valve seat (21) is held loose in the valve unit (17) between the valve member (19) and the armature plate (15),
1.9 the valve unit (17) is inserted into an open end (3) of the housing (2),
1.10 the valve spring (24) sits on an inner shoulder (32) of the housing (2),
1.11 and the valve seat (21) is formed on a valve body (20),
1.12 the valve body (20) being held with play between the armature plate (15) and the valve member (19) in the pre-assembled valve unit (17).

2. A valve according to claim 1,
**characterised in that** the valve spring (24) and the armature plate (15) are arranged on one front face (26) of the valve body (20) and the valve member (19) is arranged on the other front face (27) of the valve body (20).

3. A valve according to claim 1 or 2,
**characterised in that** the valve body (20) has a flow opening (29) through which a valve lifter (22) protrudes and that the valve lifter (22) supports the armature plate (15), the valve spring (24) and the valve member (19).

4. A valve according to one of claims 1 to 3,
**characterised in that** the valve spring (24) of the valve unit (17) is positioned radially by being fitted in the open end (2) of the housing (2) and that the valve member (19) is oriented in relation to the valve seat (21) on the valve body (20).

5. A valve according to one of claims 1 to 4,
**characterised in that** the depth to which the valve unit (17) is inserted into the open end (3) of the housing (2) is limited by an inner shoulder (32).

6. A valve according to one of claims 1 to 5,
**characterised in that** the valve spring (24) is fixed such that it is unable to rotate.

7. A valve according to claim 1,
**characterised in that** the valve spring (24) is fixed on the valve body (20) such that it is unable to rotate.

8. A valve according to claim 7,
**characterised in that** the valve spring (24) is fixed on the valve body (20) by laser.

9. A valve according to one of claims 1 to 8,
**characterised in that** the valve travel (H) of the valve (1) is set when the valve unit (17) is pre-assembled.

10. A valve according to one of claims 1 to 9,
**characterised in that** the valve spring (24) is free of spring forces in the pre-assembled valve unit (17).

11. A valve according to one of claims 1 to 10,
**characterised in that** the valve body (20) is outsized and is forced into the open end (3) of the housing (2).

12. A valve according to one of claims 1 to 11,
**characterised in that** the valve body (20) is thermically caulked in the open end (3) of the housing (2).

13. A valve according to one of claims 1 to 12,
**characterised in that** the valve (10) is open when currentless.

14. A valve according to claim 13,
**characterised in that** the valve spring (24) is free of return forces in the currentless open position.

## Revendications

1. Soupape électromagnétique pour un système de carburant, composée d'une enveloppe (2) dans laquelle sont disposées une bobine électrique (7) et une armature (9),
1.1 l'armature (9) et une plaque d'armature (15) formant des parties d'un circuit magnétique,
1.2 et la plaque d'armature (15) portant un organe de soupape (19),
1.3 qui, avec une ouverture de passage (29) prévue sur un siège de soupape (21), forme la soupape apte à être manoeuvrée (1),
1.4 étant précisé que quand la bobine (7) est traversée par le courant, un champ magnétique est produit dans l'armature (9) et la plaque d'armature (15) est attirée par ladite armature (9) dans une position de fonctionnement,
1.5 et avec un ressort de soupape (24) qui, en l'absence de courant dans la bobine (7), ramène la plaque d'armature (15) dans une position de repos,
1.6 et le siège de soupape (21), l'organe de soupape (19), le ressort de soupape (24) et la plaque d'armature (15) sont retenus dans l'enveloppe (2),
**caractérisée**
1.7 en ce que le siège de soupape (21), l'organe de soupape (19), le ressort de soupape (24) et la plaque d'armature (15) sont reliés entre eux de manière imperdable et forment une unité de soupape pré-montée (17),
1.8 en ce que dans l'unité de soupape (17), le siège de soupape (21) est retenu de manière lâche entre l'organe de soupape (19) et la plaque d'armature (15),
1.9 en ce que l'unité de soupape (17) est glissée dans une extrémité ouverte (3) de l'enveloppe (2),
1.10 et en ce que le ressort de soupape (24) est posé sur un épaulement intérieur (32) de l'enveloppe (2),
1.11 et en ce que le siège de soupape (21) est formé sur un corps de base de soupape (20),
1.12 étant précisé que dans l'unité de soupape pré-montée (17), le corps de base de soupape (20) est retenu avec du jeu entre la plaque d'armature (15) et l'organe de soupape (19).

2. Soupape selon la revendication 1,
**caractérisée en ce que** le ressort de soupape (24) et la plaque d'armature (15) sont disposés sur un côté frontal (26) du corps de base de soupape (20), tandis que l'organe de soupape (19) est disposé sur l'autre côté frontal (27) du corps de base de soupape (20).

3. Soupape selon la revendication 1 ou 2,
**caractérisée en ce que** le corps de base de soupape (20) présente une ouverture de passage (29) qui est traversée par un poussoir de soupape (22), et le poussoir de soupape (22) porte la plaque d'armature (15), le ressort de soupape (24) et l'organe de soupape (19).

4. Soupape selon l'une des revendications 1 à 3,
**caractérisée en ce que** le ressort de soupape (24) de l'unité de soupape (17) est positionné radialement grâce au montage dans l'extrémité ouverte (3) de l'enveloppe (2), et aligne l'organe de soupape (19) par rapport au siège de soupape (21) sur le corps de base de soupape (20).

5. Soupape selon l'une des revendications 1 à 4,
**caractérisée en ce que** la profondeur de pénétration de l'unité de soupape (17) dans l'extrémité ouverte (3) de l'enveloppe (2) est limitée par un épaulement intérieur (32).

6. Soupape selon l'une des revendications 1 à 5,
**caractérisée en ce que** le ressort de soupape (24) est bloqué fixe en rotation.

7. Soupape selon la revendication 1,
**caractérisée en ce que** le ressort de soupape (24) est bloqué fixe en rotation sur le corps de base de soupape (20).

8. Soupape selon la revendication 7,
**caractérisée en ce que** le ressort de soupape (24) est fixé par laser sur le corps de base de soupape (20).

9. Soupape selon l'une des revendications 1 à 8,
**caractérisée en ce que** la course (H) de la soupape (1) est réglée lors du pré-montage de l'unité de soupape (17).

10. Soupape selon l'une des revendications 1 à 9,
**caractérisée en ce que** dans l'unité de soupape pré-montée (17), le ressort de soupape (24) n'est pas soumis à des forces de ressort.

11. Soupape selon l'une des revendications 1 à 10,
**caractérisée en ce que** le corps de base de soupape (20) est formé avec un surdimensionnement et est enfoncé dans l'ouverture ouverte (3) de l'enveloppe (2).

12. Soupape selon l'une des revendications 1 à 11,
**caractérisée en ce que** le corps de base de soupape (20) est soumis à un matage thermique dans l'ouverture ouverte (3) de l'enveloppe (2).

13. Soupape selon l'une des revendications 1 à 12,
**caractérisée en ce que** la soupape (1) est une soupape ouverte sans courant.

14. Soupape selon la revendication 13,
**caractérisée en ce que** le ressort de soupape (24), dans la position ouverte sans courant de la soupape (1), n'est pas soumis à des forces de rappel.
